# EUROPEAN PATENT APPLICATION

(11) **EP 4 835 318 A1**
(43) Date of publication of application: **04.11.2026**
(21) Application number: 23963259.9
(22) Date of filing: 27.12.2023
(51) Int. Cl.: F16D 66/02, F16D 65/092, G08B 21/18, G08B 25/10

(54) **SYSTEM AND METHOD FOR DETECTING VEHICLE BRAKE PAD WEAR**

(71) Applicant: Sangsin Brake Co., Ltd., Daegu 42981 (KR)
(72) Inventor: HA, Dong Jin, Dalseong-gun Daegu 42981 (KR); KIM, Hyun Seung, Dalseong-gun Daegu 42981 (KR)
(74) Representative: Ipsilon
(86) International application number: PCT/KR2023/021696
(87) International publication number: WO 2025/143295

(57) **Abstract**

The present invention relates to a system and method for detecting vehicle brake pad wear, in which a wear sensor is mounted on a brake caliper to monitor the amount of brake pad wear and provide a replacement time alert, thus enabling prevention of traffic accidents, etc., the system including: the wear sensor that is installed on one end of the disc brake caliper and measures the amount of brake pad wear; and a control unit that monitors the amount of brake pad wear, which is input from the wear sensor, and outputs an alert signal indicating a brake pad replacement time to a display unit and a warning unit when a brake pad wear value input from the wear sensor is greater than a reference value. The system may further include a wireless communication module that is connected to the control unit and transmits, to a mobile terminal, the alert signal indicating the replacement time based on the brake pad wear value and remaining thickness, and may further include a wireless communication module that is connected to the control unit and transmits, to a specific terminal or a vehicle management server, connected thereto via a wireless communication network, the alert signal indicating the replacement time based on the brake pad wear value and remaining thickness.

## Description

### [Technical Field]

The present invention relates to a vehicle brake pad wear detection system and method, and more particularly to prevent traffic accidents by mounting a wear sensor on a caliper of a disc brake, monitoring the wear amount of a brake pad, and providing an alert about break pad replacement timing.

### [Background Art]

Generally, vehicle braking is achieved as the rotational force of a wheel is reduced by the frictional force between a disc of the wheel and a brake pad. That is, when a brake pedal is pressed for vehicle braking, hydraulic pressure transmitted to a disc brake through a brake pipe presses the brake pad against the disc, whereby vehicle braking is achieved. During vehicle braking, the brake pad is worn in proportion to braking force.

When the brake pad is worn due to repeated vehicle braking, problems such as an increased braking distance and uneven braking feel occur. For heavy-duty commercial vehicles, the increased braking distance raises the risk of accidents; therefore, various technologies for measuring the wear amount of the brake pad have been developed.

In an example of a conventional brake pad wear detection device, when a brake pad reaches the wear limit, a tip of a sensor is worn and cut off, an alerting circuit is opened (turned on) to provide an alert, and an alerting light is turned on when the tip of the sensor comes into contact with a disc. However, this approach has the drawback that the driver may only recognize the issue once the brake pad has reached the wear limit. Furthermore, a shaft connected to a slide of a linear variable resistor is installed on the brake pad, the wear of the brake pad is detected using the resistance value of the linear variable resistor changed as the shaft and the slide move in proportion to the wear of the brake pad; however, this approach, while structurally simple, suffers from various issues such as low sensitivity and significant resistance fluctuations, resulting in low reliability.

### (Prior Art Documents)

(Patent Document 1) Korean Registered Patent Publication No. 10-0123822 (entitled BRAKE DEVICE EQUIPPED WITH FRICTION PAD WEAR DETECTION SENSOR, Published on December 8, 1997)
(Patent Document 2) Korean Utility Model Application Publication No. 20-1998-0040781 (entitled DEVICE FOR PROVIDING ALERT ABOUT REPLACEMENT TIMING OF BRAKE PAD OF AUTOMOTIVE DISC BRAKE, Published on September 15, 1998)
(Patent Document 3) Korean Patent Application Publication No. 10-2015-0137718 (entitled ELECTRONIC CALIPER BRAKE, Published on December 9, 2015)

### [Disclosure]

### [Technical Problem

It is an object of the present invention to provide a vehicle brake pad wear detection system capable of preventing traffic accidents by mounting a wear sensor on a brake caliper, monitoring the wear amount of a brake pad, and providing an alert about the replacement timing.

### [Technical Solution]

A vehicle brake pad wear detection system according to the present invention includes a pair of back plates installed in a caliper so as to be opposite each other, brake pads fixed to front surfaces of the back plates, respectively, a brake disc installed between the brake pads, a wear sensor installed on one end of the caliper, the wear sensor being configured to measure a wear amount of the brake pads, and a control unit configured to monitor the wear amount of the brake pads input from the wear sensor and to output an alert signal for brake pad replacement timing to a display unit and an alerting unit if the wear value of the brake pads input from the wear sensor exceeds a reference value.

The vehicle brake pad wear detection system may further include a wireless communication module connected to the control unit, the wireless communication module being configured to transmit the wear value of the brake pads and the alert signal for brake pad replacement timing to a mobile terminal.

The vehicle brake pad wear detection system may further include a wireless communication module connected to the control unit, the wireless communication module being configured to transmit the wear value of the brake pads and the alert signal for brake pad replacement timing to a specific terminal or a vehicle management server connected via a wireless communication network.

The wear sensor may include an automatic distance adjustment device provided in the caliper, an adjustment gear provided in the automatic distance adjustment device, a connecting gear engaged with the adjustment gear, a sensor shaft extending from the connecting gear, the sensor shaft being configured to be rotated together with the connecting gear, a reducer axially connected to an end of the sensor shaft, a permanent magnet fixed to an output shaft of the reducer, and a Hall sensor installed opposite the permanent magnet, the Hall sensor being configured to detect a rotating magnetic field of the permanent magnet, wherein the Hall sensor may measure the changes in magnetic flux generated as the permanent magnet is rotated, the changes in magnetic flux may be converted into a voltage, and the voltage may be output, whereby it is possible to acquire the wear value of the brake pads, which become thinner due to braking friction.

A vehicle brake pad wear detection method according to the present invention includes a) measuring the wear value of brake pads using a wear sensor installed on a caliper of a disc brake, b) inputting the measured wear value of the brake pads to a control unit so as to be monitored by the control unit, c) allowing the brake pads to wear down due to braking, d) comparing, by the control unit, the wear value of the brake pads input from the wear sensor with a reference value, e) outputting an alert signal for replacement timing if the wear value of the brake pads input from the wear sensor exceeds the reference value, and f) providing an alert about brake pad replacement timing through a display unit and an alerting unit according to the alert signal.

The vehicle brake pad wear detection method may further include, after step f), in which the alert about the replacement timing is provided through the display unit and the alerting unit according to the alert signal, transmitting the wear value of the brake pads and the alert signal for replacement timing based on (considering) the remaining thickness of the brake pads to a mobile terminal through a wireless communication module of the control unit.

The vehicle brake pad wear detection method may further include, after step f), in which the alert about the replacement timing is provided through the display unit and the alerting unit according to the alert signal, transmitting the wear value of the brake pads and the alert signal for replacement timing based on the remaining thickness of the brake pads to a specific terminal stored in the control unit or a vehicle management server via the wireless communication module of the control unit and a wireless communication network.

### [Advantageous Effects]

According to the present invention, the wear of a brake pad is detected by a wear sensor mounted on a caliper of a disc brake and an alert about the replacement timing is provided, and therefore it is possible to induce timely replacement of the brake pad, which is economical, and to prevent vehicle accidents, thereby protecting valuable human lives and property.

According to the present invention, the wear amount of the brake pads 4 and 5 is detected in a non-contact manner using a permanent magnet and a Hall sensor installed on an automatic distance adjustment device that maintains a constant distance between the brake pads and a brake disc, and an alert about the replacement timing of the brake pads is provided. Consequently, compared to a conventional contact-type pad wear detection device, it is possible to achieve high precision in measurement of the wear amount (wear value) of the brake pads, excellent durability without temperature variations, and significantly improved reliability without being affected by vehicle vibration and shock, making the present invention a highly useful invention.

### [Description of Drawings]

FIG. 1 is a plan sectional view showing an example of the present invention.
FIG. 2 is a side sectional view showing the example of the present invention.
FIG. 3 is a circuit block diagram showing the example of the present invention.
FIG. 4 is a circuit block diagram showing another example of the present invention.
FIG. 5 is a system flowchart showing an example of the present invention.
FIG. 6 is a system flowchart showing another example of the present invention.

### <Description of Reference Numerals>

1: Caliper 2, 3: Back plate
4, 5: Brake pad 6: Brake disc
7: Automatic pad distance adjustment device 8: Adjustment gear
9: Wear sensor 10: Control unit
11: Connecting gear 12: Piston
13: Sensor shaft 14: Reducer
15: Permanent magnet 16: Hall sensor (Hall IC)
20: Setting unit 21: Display unit
22: Alerting unit 23: Wireless communication module
24: Mobile terminal 25: Wireless communication network
26: Specific terminal 27: Management server

### [Best Mode]

Hereinafter, preferred embodiments of the present invention will be described in detail with reference to the accompanying drawings. In describing the embodiments of the present invention, the same elements in the drawings are denoted by the same reference numerals if possible, and a detailed description of related known configurations and functions will be omitted such that the subject matter of the present invention is not obscured. In addition, the details shown in the accompanying drawings are schematized in order to easily describe the embodiments of the present invention and may be different from actually implemented shapes.

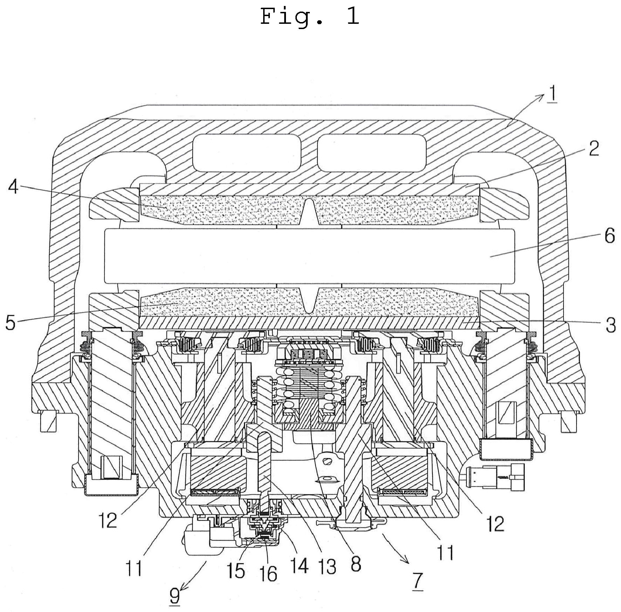

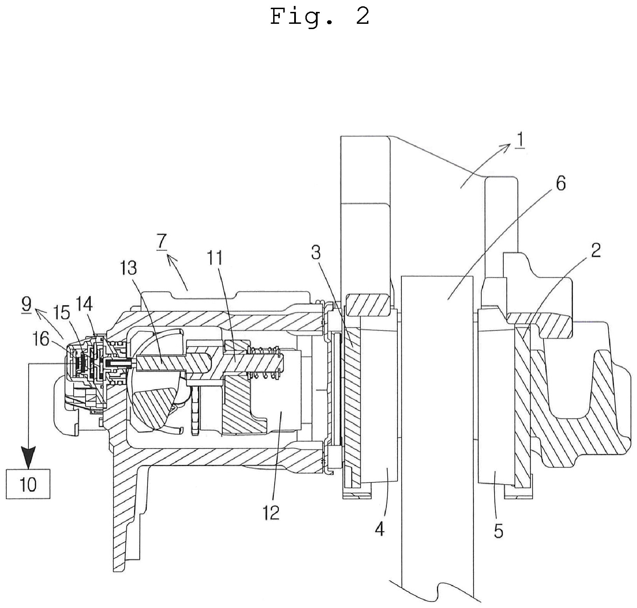

FIGs. 1 and 2 are views showing the configuration of a vehicle brake pad wear detection system according to an example of the present invention, wherein the vehicle brake pad wear detection system includes a pair of back plates 2 and 3 installed in a caliper 1 of a disc brake so as to be opposite each other, brake pads 4 and 5 fixed to front surfaces of the back plates 2 and 3, respectively, a brake disc 6 installed between the brake pads 4 and 5, a wear sensor 9 installed on an adjuster gear 8 of an automatic brake pad distance adjustment device 7 provided at the caliper 1 to measure the wear amount of each of the brake pads 4 and 5, a control unit 10 configured to monitor the wear amount of the brake pads 4 and 5 input from the wear sensor 9 and to output a wear alert signal for the brake pads 4 and 5 to a display unit and an alerting unit if the wear value of the brake pads 4 and 5 input from the wear sensor 9 exceeds a reference value.

In normal times, the distance between the brake disc and the brake pads 4 and 5 is maintained constant, but when the brake pads 4 and 5 wear beyond a certain level due to friction during braking, the automatic distance adjustment device 7 is operated to maintain the distance between the brake disc and the brake pads 4 and 5, the front and rear back plates 2 and 3 move close to each other by the rotating adjuster 8, whereby a constant distance between the brake disc 6 and the brake pads 4 and 5 is maintained, and therefore a reduction (or loss) in braking force of the disc brake is prevented. If the brake pads 4 and 5 wear down to a thickness below a certain threshold due to frequent braking, the automatic distance adjustment device 7 is operated again through the aforementioned process, and the worn brake pads 4 and 5 move forward by a predetermined distance, whereby the distance between the brake pads and the brake disc 6 is maintained constant, and therefore a reduction in braking force is prevented.

The brake pads 4 and 5 are moved by the automatic distance adjustment device 7 such that a constant distance between the brake pads and the brake disc 6 is maintained; however, if the brake pads 4 and 5 become excessively worn due to frequent use thereof, braking force is lost, which may lead to major accidents. In the present invention, therefore, the wear sensor 9 is installed on the automatic distance adjustment device 7 to detect the wear amount of the brake pads 4 and 5, and if the brake pads 4 and 5 have been excessively worn, the wear sensor detects the same and provides an alert about brake pad replacement timing.

In the automatic distance adjustment device 7, the adjuster gear 8 is rotated in one direction driven by a driving means (not shown), a connecting gear 11 engaged with the adjuster gear 8 is rotated, a piston 12 engaged with the connecting gear 11 via a ball screw mechanism is moved forward to push the back plates 2 and 3, whereby a constant distance between the brake pads 4 and 5 and the brake disc 6 is maintained. A reducer 14 including a plurality of gears is axially connected to an end of a sensor shaft 13 extending from or coupled to one side of the connecting gear 11 so as to be rotated together with the connecting gear, a disc-shaped multipole permanent magnet 15 is installed on an output shaft of the reducer 14 so as to be rotated at a reduced speed, a Hall sensor (Hall IC) 16 is fixedly installed on the opposite side of the permanent magnet 15 so as to face the permanent magnet while being adjacent to the permanent magnet, and the Hall sensor 16 measures a rotating magnetic field (magnetic flux variation) of the permanent magnet 15, converts the same into a voltage, and outputs the voltage, whereby a wear sensor 9 capable of acquiring the wear value of the brake pads 4 and 5, which become thinner due to braking friction, is configured.

Even if the connecting gear 11 is rotated several revolutions, the permanent magnet 15 is rotated by an angle of less than 360° by the reducer 14, allowing the Hall sensor 16 to accurately measure the rotating magnetic field (rotational displacement) of the permanent magnet 15.

When the adjust gear 8 and the connecting gear 11 are rotated, the piston 12 engaged with the connecting gear 11 via the ball screw mechanism is moved linearly forward to push the back plates 2 and 3, whereby a constant distance is maintained between the brake pads and the brake disc.

When the adjustment gear 8 is rotated to maintain a constant distance between the brake pads and the brake disc, the wear sensor 9 detects the wear amount of the brake pads 4 and 5 through the rotating magnetic field Hall sensor 16 of the permanent magnet installed on the output shaft of the reducer 14 so as to be rotated at a reduced speed. Since the wear sensor is a non-contact type rotation detection sensor, the wear sensor offers excellent measurement accuracy and excellent durability without temperature variations, compared to a conventional contact-type wear sensor. Furthermore, the wear sensor is capable of measuring the wear amount of the brake pads 4 and 5 without being affected by vehicle vibration and shock, and therefore reliability of the wear sensor is high.

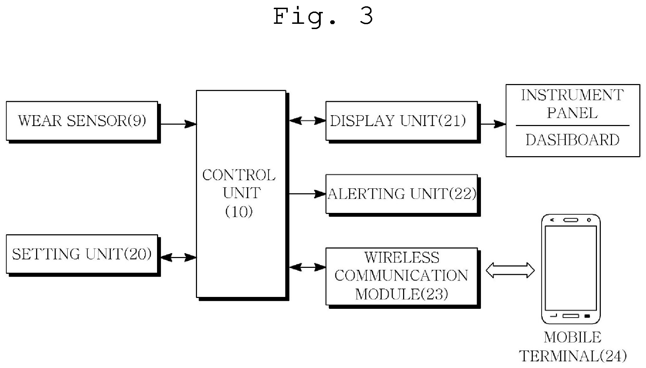

FIG. 3 is a circuit block diagram of the brake pad wear detection system according to the present invention, wherein a wear sensor 5 that measures and inputs the wear value of the brake pads 4 and 5 when the thickness of the brake pads decreases due to friction and a setting unit 20 that sets a wear reference value used as a reference value when determining the wear amount or the wear level of the brake pads 4 and 5 and monitoring conditions or states are connected to an input side of the control unit 10.

A display unit 21 installed on an instrument panel or dashboard of a driver's seat to display the measured real-time or non-real-time wear amount of each brake pad as an indicator, a seven-segment display, an LED, an LCD, or a similar means, an alerting unit 22 that provides an alert about the brake pad replacement timing based on the thickness of the brake pads reduced by wear or the brake pad replacement timing considering the remaining thickness of the brake pads via a buzzer or siren, and a wireless communication module 23 that wirelessly transmits the measured wear amount of the brake pads 4 and 5 and an alert signal based on the remaining thickness of the brake pads to a mobile terminal 24 carried by a driver are connected to an output side of the control unit 7.

The control unit 10 monitors the wear value (wear amount) of the brake pads 4 and 5 input from the wear sensor 9, and displays the wear value of the brake pads 4 and 5 input from the wear sensor 9 on the display unit 21 using control logic, and provides an alert through the alerting unit 22, allowing the driver to immediately recognize the state. This enables timely replacement of the brake pads 4 and 5, thereby preventing vehicle accidents.

The wear sensor 9 of the present invention is installed on the automatic distance adjustment device 7 to measure the wear value of the brake pads 4 and 5 through non-contact rotation, whereby wear or deformation of the wear sensor 9 and vehicle body vibration and noise are prevented.

The wireless communication module 23 may be RF Wi-Fi, Bluetooth, USB, Beacon, RF Wi-Fi (Radio Frequency Wireless Fidelity) with a communication range of several kilometers, or a wireless data logger.

The beacon, which is a next-generation short-range communication technology for smartphones using low-power Bluetooth, locates (and is connected by call) a mobile terminal 14 within a radius of 50 to 70 meters and transmits the wear value of the brake pads 4 and 5 and an alert signal for replacement timing based on the remaining thickness of the brake pads.

The alerting unit 22 may provide an alert in various ways, including not only auditory sense but also tactile sensation that stimulates the driver's skin.

When a tractor is towed in a state of being connected to a rear end of a tractor with a driver on board, a considerable distance between the tractor and the trailer is maintained, whereby the system according to the present invention may be applied to a brakes of the trailer located at the rear end of the tractor. The wear value of the brake pads 4 and 5 measured by the wear sensor 9 and an alert signal for replacement timing based on the remaining thickness of the brake pads determined by the control unit 10 or an alert signal for replacement timing based on the remaining thickness of the brake pads 4 and 5 is transmitted to the driver's mobile terminal 24 through the wireless communication module 23. Consequently, the driver or a mechanic may recognize the same and replace the brake pads 4 and 5 in a timely manner, thereby preventing major accidents.

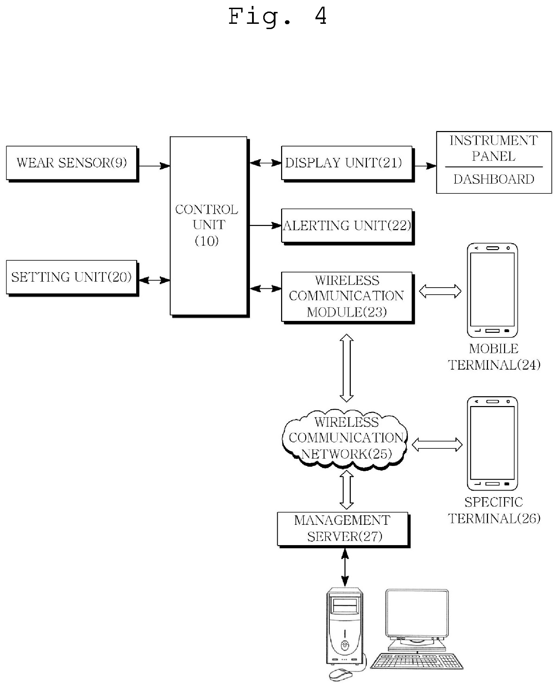

FIG. 4 is a circuit block diagram of another embodiment of the brake pad wear detection system according to the present invention, wherein the system may be configured to transmit data to a specific terminal 26 of an administrator (or a specific person) or to a vehicle management server 27 through the wireless communication module 23 and a wireless communication network 15. A wear value signal of each of the brake pads 4 and 5 and an alert signal for replacement timing based on remaining thickness thereof are transmitted to the specific terminal 26 and/or the vehicle management server 17 via the wireless communication module 13 of the control unit 7 and the commercial or non-commercial wireless communication network 15, whereby it is possible to create a database of the wear states of brake pads 4 and 5 for vehicles belonging to freight companies, bus companies, passenger transport companies, and taxi companies, and the database may be actively utilized for replacement and maintenance of the brake pads 4 and 5. The vehicles belonging to the aforementioned companies are assigned and given an ID, which is a unique identification code or number for each vehicle.

The wireless communication network 15 may be commercial or business-use.

The control unit 7 may be dedicated, or may be a vehicle control ECU and/or an ABS control unit.

In the present invention, an alert about the replacement timing based on the wear value and the remaining thickness of the brake pads 4 and 5 may be output through the display unit 21 and the alerting unit 22 installed on the instrument panel or the dashboard, or may be output through a separate display device or alerting device installed at a different position than the instrument panel or the dashboard.

In the present invention, the wear value of the brake pads 4 and 5 transmitted to the specific terminal 26 or the management server 27 and an alert signal indicating the replacement timing of the brake pads 4 and 5 are implemented by an application installed on the mobile terminal 24 or the specific terminal 26 or by an application program on the management server 27.

In the present invention, the wear value signal of the brake pads 4 and 5 measured by the wear sensor 9 installed on the caliper 1 of the disc brake and the alert signal for brake pad replacement timing 4 and 5 determined by the control unit 10 are displayed and output through the display unit 21 and the alerting unit 22 installed on the instrument panel or the dashboard, allowing the wear amount and the replacement timing of the brake pads 4 and 5 to be easily understood at a glance. This enables timely replacement of the brake pads 4 and 5, thereby preventing vehicle accidents.

Furthermore, in the present invention, the wear value signal of the brake pads 4 and 5 measured by the wear sensor 9 installed on the caliper 1 of the disc brake and the alert signal for brake pad replacement timing 4 and 5 determined by the control unit 10 are transmitted to the driver's mobile terminal 23 via the wireless communication module 23, or are transmitted to the specific terminal 26 or the vehicle management server 27 via the wireless communication module 23 and the wireless communication network 25, allowing the wear amount and the replacement timing of the brake pads 4 and 5 to be easily understood at a glance for appropriate action or management and database construction.

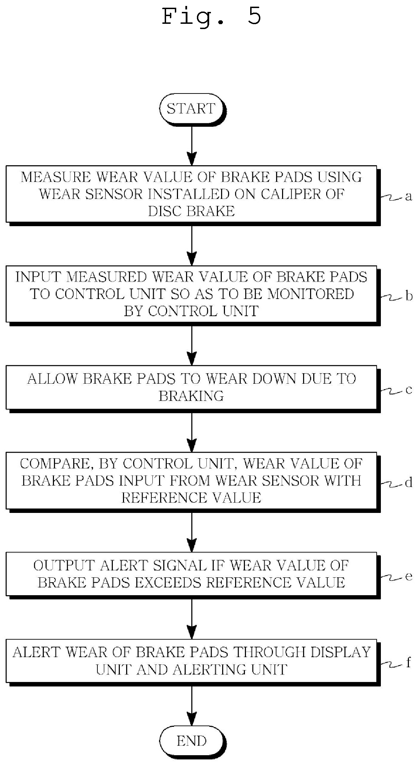

FIG. 5 is a flowchart of a vehicle brake pad wear detection method according to the present invention, wherein the wear value of the brake pads 4 and 5 is measured by the wear sensor 9 installed on the caliper 1 of the disc brake (step a), the measured wear value of the brake pads 4 and 5 is input to and monitored by the control unit 10 (step b), the brake pads 4 and 5 wear down due to frequent braking (step c), the wear value of the brake pads 4 and 5 input to the control unit 10 is compared with a reference value (step d), an alert signal indicating the replacement timing based on the remaining thickness of the brake pads 4 and 5 is output if the wear value of the brake pads 4 and 5 input from the wear sensor 10 exceed the reference value (step e), and an alert about the replacement timing of the brake pads 4 and 5 due to wear thereof is provided through the display unit 21 and the alerting unit 22 according to the alert signal (step f), whereby the driver may recognize the same and take corrective action, such as replacing the brake pads 4 and 5, and therefore it is possible to preventing vehicle accidents caused by wear of the brake pad 4 and 5 and to protect valuable human lives and property.

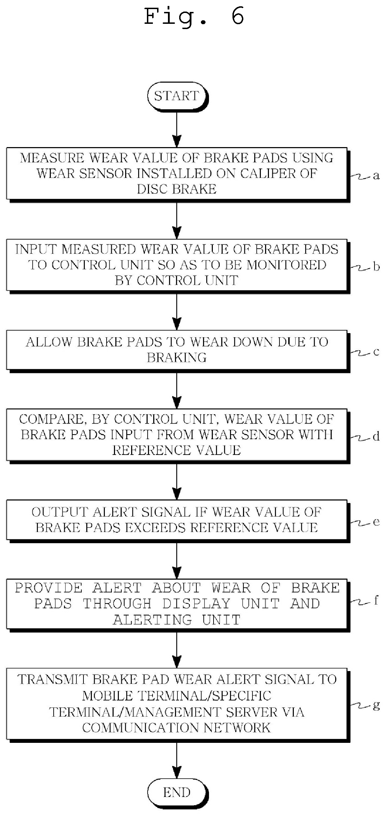

FIG. 6 is another flowchart of the vehicle brake pad wear detection method of the present invention, wherein, after step f, in which the alert about the replacement timing of the brake pads 4 and 5 due to wear thereof is provided through the display unit 21 and the alerting unit 22 according to the alert signal, an alert signal indicating the replacement timing based on the wear value and the remaining thickness of the brake pads 4 and 5 is transmitted to the mobile terminal 24 through the wireless communication module 23 of the control unit 7, or after step f, in which the alert about the replacement timing of the brake pads 4 and 5 due to wear thereof is provided through the display unit 21 and the alerting unit 22 according to the alert signal, the replacement timing based on the wear value of the brake pads 4 and 5 and the remaining thickness of the brake pads 4 and 5 is transmitted to the specific terminal 26 and/or the vehicle management server 27 via the wireless communication module 23 of the control unit 7 and the wireless communication network 25 (step g), allowing the wear amount and the replacement timing of the brake pads 4 and 5 to be easily understood at a glance for appropriate action or management and database construction.

In the present invention, the wear amount of the brake pads 4 and 5 is detected in a non-contact manner using the permanent magnet and the Hall sensor installed on the automatic distance adjustment device that maintains a constant distance between the brake pads and the brake disc, and an alert about the replacement timing of the brake pads is provided. Consequently, compared to a conventional contact-type pad wear detection device, it is possible to achieve high precision in measurement of the wear amount (wear value) of the brake pads, excellent durability without temperature variations, and significantly improved reliability without being affected by vehicle vibration and shock.

The present invention is not limited to the above embodiments and the accompanying drawings, and various substitutions, modifications, and alterations are possible without departing from the technical idea of the present invention, which is obvious to a person having ordinary skill in the art.

## Claims

1. A vehicle brake pad wear detection system comprising:
a pair of back plates installed in a caliper so as to be opposite each other;
brake pads fixed to front surfaces of the back plates, respectively;
a brake disc installed between the brake pads;
a wear sensor installed on one end of the caliper, the wear sensor being configured to measure a wear amount of the brake pads; and
a control unit configured to monitor the wear amount of the brake pads input from the wear sensor and to output an alert signal for brake pad replacement timing to a display unit and an alerting unit if a wear value of the brake pads input from the wear sensor exceeds a reference value.

2. The vehicle brake pad wear detection system according to claim 1, further comprising a wireless communication module connected to the control unit, the wireless communication module being configured to transmit the wear value of the brake pads and the alert signal for brake pad replacement timing to a mobile terminal.

3. The vehicle brake pad wear detection system according to claim 1, further comprising a wireless communication module connected to the control unit, the wireless communication module being configured to transmit the wear value of the brake pads and the alert signal for brake pad replacement timing to a specific terminal or a vehicle management server connected via a wireless communication network.

4. The vehicle brake pad wear detection system according to any one of claims 1 to 3, wherein the wear sensor comprises:
an automatic distance adjustment device provided in the caliper;
an adjustment gear provided in the automatic distance adjustment device;
a connecting gear engaged with the adjustment gear;
a sensor shaft extending from the connecting gear, the sensor shaft being configured to be rotated together with the connecting gear;
a reducer axially connected to an end of the sensor shaft;
a permanent magnet fixed to an output shaft of the reducer; and
a Hall sensor installed opposite the permanent magnet, the Hall sensor being configured to detect a rotating magnetic field of the permanent magnet.

5. A vehicle brake pad wear detection method comprising:
a) measuring a wear value of brake pads using a wear sensor installed on a caliper of a disc brake;
b) inputting the measured wear value of the brake pads to a control unit so as to be monitored by the control unit;
c) allowing the brake pads to wear down due to braking;
d) comparing, by the control unit, the wear value of the brake pads input from the wear sensor with a reference value;
e) outputting an alert signal for replacement timing if the wear value of the brake pads input from the wear sensor exceeds the reference value; and
f) providing an alert about brake pad replacement timing through a display unit and an alerting unit according to the alert signal.

6. The vehicle brake pad wear detection method according to claim 5, further comprising, after step f), in which the alert about the replacement timing is provided through the display unit and the alerting unit according to the alert signal, transmitting the wear value of the brake pads and the alert signal for replacement timing to a mobile terminal through a wireless communication module of the control unit.

7. The vehicle brake pad wear detection method according to claim 5, further comprising, after step f), in which the alert about the replacement timing is provided through the display unit and the alerting unit according to the alert signal, transmitting the wear value of the brake pads and the alert signal for replacement timing to a specific terminal stored in the control unit or a vehicle management server via a wireless communication module of the control unit and a wireless communication network.
